**Europäisches Patentamt**

**European Patent Office**

**Office européen des brevets**

(19)

(11) Veröffentlichungsnummer : **0 416 244 B1**

(12)

# EUROPÄISCHE PATENTSCHRIFT

(45) Veröffentlichungstag der Patentschrift :
**30.11.94 Patentblatt 94/48**

(51) Int. Cl.⁵ : **H01M 10/52,** H01M 10/34,
H01M 4/24

(21) Anmeldenummer : **90113198.7**

(22) Anmeldetag : **11.07.90**

(54) Gasdicht verschlossene alkalische Sekundärzelle.

(30) Priorität : **04.09.89 DE 3929304**

(43) Veröffentlichungstag der Anmeldung :
**13.03.91 Patentblatt 91/11**

(45) Bekanntmachung des Hinweises auf die
Patenterteilung :
**30.11.94 Patentblatt 94/48**

(84) Benannte Vertragsstaaten :
**CH DE FR GB LI NL**

(56) Entgegenhaltungen :
**EP-A- 0 174 526
EP-A- 0 218 028
GB-A- 2 023 918
US-A- 4 614 696
US-A- 4 826 744**

(73) Patentinhaber : **VARTA Batterie
Aktiengesellschaft
Postfach 5 40,
Am Leineufer 51
D-30405 Hannover (DE)**

(72) Erfinder : **Simon, Gerhard
Lorsbacher Strasse 22
D-6233 Kelkheim (DE)**
Erfinder : **Kleinsorgen, Klaus
Ruppertshainer Strasse 21
D-6233 Kelkheim (DE)**
Erfinder : **Köhler, Uwe, Dr.
Falkensteiner Strasse 5
D-6233 Kelkheim (DE)**

(74) Vertreter : **Kaiser, Dieter Ralf, Dipl.-Ing.
Gundelhardtstrasse 72
D-65779 Kelkheim (DE)**

EP 0 416 244 B1

Jouve, 18, rue Saint-Denis, 75001 PARIS

## Beschreibung

Die Erfindung betrifft eine gasdicht verschlossene alkalische Sekundärzelle mit mindestens einer positiven Elektrode, einer negativen Elektrode, einem zwischenliegenden Separator und einer mit der negativen Elektrode elektronenleitend verbundenen schichtförmigen Hilfselektrode zum Abbau des Sauerstoffdrucks.

Das Anwendungsgebiet der Erfindung erstreckt sich auf alle Arten gasdichter alkalischer Zellen, die im Sauerstoffverzehr-Zyklus arbeiten, insbesondere Ni/Cd-, Ni/Zn- und Ni/Hydrid-Speicherzellen.

Bekanntlich läßt sich die beim Überladen dieser Zellen entstehende Ansammlung von Sauerstoff wirksam verhindern, wenn man die Fläche der negativen Elektrode quasi vergrößert, indem man sie mit einer Hilfselektrode kurzschließt, an welcher die Sauerstoff-Verzehrreaktion gemäß

$$O_2 + 2H_2O + 4e^- \rightarrow 4OH^-$$

kinetisch weniger als an der negativen Hauptelektrode gehemmt ist. Die negative Hilfselektrode enthält deshalb zumindest Katalysatoren wie Platinmetalle, Silber, Kupfer oder auch Kohlenstoff und besitzt zudem vorzugsweise aufgrund hoher Porosität eine große innere Oberfläche.

Von kritischem Einfluß auf den Sauerstoffverzehr ist auch die Elektrolytmenge, da einerseits aus Gründen der Überladesicherheit mit unterschüssigem Elektrolyt gearbeitet werden sollte, während andererseits eine Belastung der Zelle mit hohen Strömen viel Elektrolyt verlangt. In jedem Falle sollte die Elektrolytmenge jedoch so bemessen sein, daß sich an der aktiven Elektrodenoberfläche ein für den Sauerstoffumsatz unbedingt notwendiges Dreiphasengleichgewicht einstellen kann.

Anders als bei gasdichten Ni/Cd-Zellen ist bei Ni/Hydrid-Zellen ein restloses Abfangen des Sauerstoffgases schon aus dem Grunde wichtig, weil die Speicherlegierung in seiner Gegenwart korrodiert.

In Anpassung an den üblichen Engeinbau der Elektroden in Akkumulatoren hoher Energie- und Leistungsdichte sind die Hilfselektroden in diesen Zellen ebenso wie die Elektrodenplatten dünne, schichtförmige Gebilde und liegen im Plattenstapel oft eng an den negativen Platten an.

Der DE-AS 15 96 223 läßt sich sogar ein Ni/Cd-Akkumulator mit Hilfselektrode in Form einer Wickelzelle entnehmen, bei dem die Hilfselektrode die letzte Spirale der negativen Elektrode überdeckt und zugleich in enger Berührung mit der Innenwand des Gehäuses steht, welches den negativen Zellenpol bildet. Diese Deckschicht auf der negativen enthält in einem porösen, hydrophoben Trägermaterial feinverteiltes Silber oder ein anderes Metall von höher elektropositivem Charakter als Cadmium, so daß es im Kontakt mit diesem eine negative Mischelektrode bildet, an der die Sauerstoff-Reduktionsgeschwindigkeit erhöht ist.

Bei einem aus der DE-PS 28 38 857 bekannten Metalloxid/Lanthannickelhydrid-Akkumulator besteht die Sauerstoff-Reduktionselektrode aus einem mit Ruß beschichteten Nickelnetz, das mit der negativen Elektrode über einen Draht kurzgeschlossen und zur positiven Elektrode hin mit einem Separator abgedeckt ist, der eine geringere Elektrolytaffinität als die beiden Hauptelektroden besitzt, so daß er die Sauerstoffströmung nur wenig behindert. Die Hydridelektroden werden dagegen durch Isolierung mit einem zweiten Separatormaterial, das im feuchten Zustand nur eine geringe Gaspermeabilität besitzt, vor herandiffundierendem Sauerstoff möglichst geschützt.

Die Erfindung liegt die Aufgabe zugrunde, den Sauerstoffumsatz in einer gasdichten, mit einer Hilfselektrode arbeitenden alkalischen Sekundärzelle noch wirksamer und dauerhafter als bisher zu unterstützen, zugleich aber den von der Hilfselektrode ebenfalls katalysierten $NO_2/NH_3$ - Selbstentlade-Shuttle möglichst zu unterdrücken.

Die Aufgabe wird erfindungsgemäß durch eine Sekundärzelle gelöst, wie sie im Patentanspruch 1 angegeben ist.

Danach hat sich die Ausstattung einer solchen Zelle mit einer Hilfselektrode als sehr günstig erwiesen, die eine Dreischichtenstruktur besitzt und bei der jede Schicht aufgrund spezieller Eigenschaften den Erfordernissen für einen zügigen Sauerstoffverzehr auf ihre Weise Rechnung trägt.

So bildet die elektrisch nicht leitende erste Schicht dank einer hohen Porosität und hydrophobem Verhalten eine Gasleitschicht, durch welche Sauerstoff leichten Zutritt zur Reaktionszone erlangt, während Elektrolytflüssigkeit am Eindringen gehindert wird.

Die für die Sauerstoffreduktion jedoch notwendige Anwesenheit von Wasser wird durch die zweite Schicht sichergestellt, indem diese hydrophil ist und mit Hilfe eines Feuchtigkeitsreservoirs für eine ständige Benetzung der Katalysatorschicht, der eigentlichen Verzehrschicht, sorgt, die sich als dritte Schicht anschließt.

Da die Katalysatorschicht durch einen Kunststoffbindemittel-Zusatz zum Katalysator wiederum hydrophob eingestellt ist, erstreckt sich zwischen der zweiten und der dritten Schicht der erfindungsgemäßen Hilfselektrode eine Zone, die hydrophob und hydrophil zugleich ist, was ideale Bedingungen für ein Dreiphasengleichgewicht schafft.

Die dritte Schicht steht zumindest in elektronischem Kontakt, in der Regel außerdem in engem mechanischen Kontakt zur negativen Hauptelektrode der Zelle.

Materielle Grundlage für die beiden ersten Schichten der neuen Hilfselektrode ist ein einlagiges hochporöses Kunststoffaservlies mit 90 bis 99 % Porenvolumen. Seine hydrophoben Eigenschaften gewährleisten eine Passage für den aus dem Gasraum anströmenden Sauerstoff auch bei langfristigem Betrieb.

Durch Bestreichen der einen Seite des Vlieses mit einer wasserhaltigen Tylose-Mischung (Tylose = Sammelname für ein großes Sortiment wasserlöslicher Celluloseäther, insbesondere Methylcellulose und carboxymethylcellulose) wird in dem Vlies, das auf der abgekehrten Seite seine ursprüngliche Hydrophobizität beibehält (erste Schicht) eine hydrophile Schicht (zweite Schicht) erzeugt, indem die Tylose bis zu einer gewissen Tiefe in das Faservlies ein dringt und aufgrund ihrer hydrophilen Eigenschaft stets eine gewisse Elektrolytmenge, die ausreichend ist, um die angrenzende Katalysator- bzw. Verzehrschicht dauernd zu benetzen, an sich bindet. Auf diese Weise wird eine Austrocknung und damit eine Funktionsminderung der Hilfselektrode vermieden.

Das Material der katalytisch aktiven dritten Schicht setzt sich aus 50 bis 80 Gew.% Aktivkohle, 3 bis 20 Gew.% Ruß, gegebenenfalls Graphit, als Leitmittel und 10 bis 30 Gew.% PTFE zusammen. Dieses Material liegt in Form einer Walzmischung aus den angegebenen Komponenten vor. Eine besonders günstige Mischung setzt sich aus ca. 75 Gew.% Aktivkohle, ca. 7,5 Gew.% Leitruß und ca. 17,5 Gew.% PTFE zusammen.

Die Verbindung von Aktivkohle und wasserabstoßendem PTFE gewährleistet im Übergangsbereich zur tylosehaltigen, hydrophilen zweiten Schicht ein Vorhandensein vieler Dreiphasengrenzen mit großen, für den $O_2$ -Umsatz wichtigen inneren Oberflächen. Der zugesetzte Leitruß sorgt für einen leichten Elektronentransfer zu den in dieser Zone enthaltenen Verzehrbezirken. Die Elektronen kommen dabei von der negativen Elektrode des gasdichten Akkumulators, mit der die Verzehrschicht in direkter, vorzugsweise flächenhafter Verbindung steht.

Anhand einiger Figuren wird der Gegenstand der Erfindung verdeutlicht.

Figur 1 zeigt den schichtmäßigen Aufbau der neuen Hilfselektrode schematisch.

Figur 2 gibt die Fertigungsweise der Hilfselektrode gemäß der Erfindung wieder.

Figuren 3 und 4 zeigen mögliche Anordnungen der neuen Hilfselektrode in Wickelzellen.

Figuren 5 bis 7 zeigen mögliche Anordnungen der neuen Hilfselektroden in prismatischen Zellen.

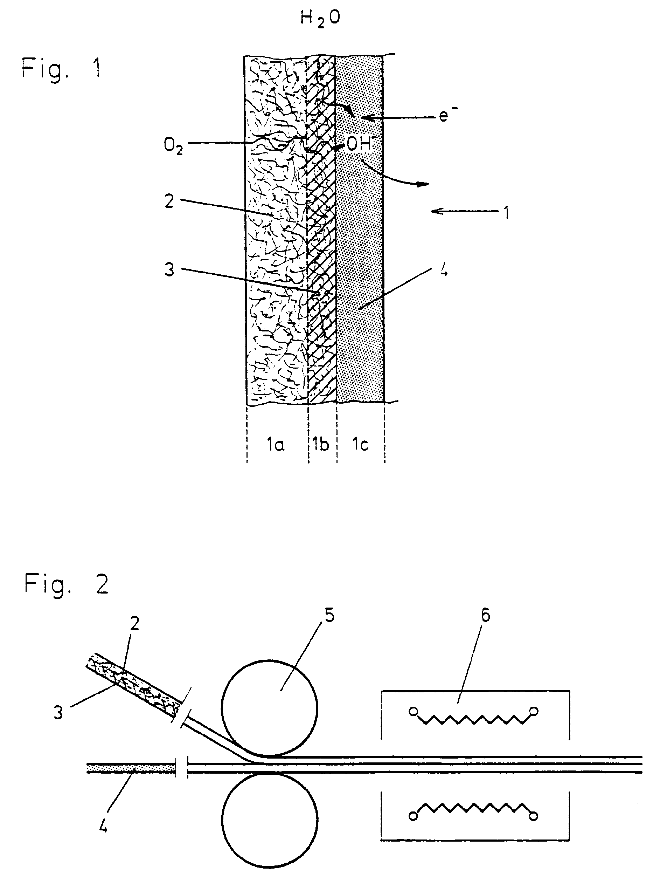

Nach Figur 1 wird die erste Schicht 1a der dreischichtigen Elektrode 1 durch die in ihrem ursprünglichen Zustand belassene eine Seite des Kunststoffaservlieses 2 gebildet, während die zweite Schicht 1b das Ergebnis einer Imprägnierung der anderen Vliesseite mit einer wässrigen Tylosemischung 3 ist. Die Schicht 1b des Vlieses ist dadurch hydrophil. Die dritte Schicht 1c ist eine aus der weiter oben angegebenen Aktivkohlemischung gewalzte Folie 4. Sie kann zusätzlich eine Metallnetzeinlage, z. B. aus Nickel, enthalten und über diese Armierung mit der negativen Hauptelektrode elektrisch kontaktiert sein.

Es ist ferner der Mechanismus des Sauerstoff-Abbaus an der Hilfselektrode angedeutet: $O_2$ aus dem Gas- oder Elektrolytraum durchdringt leicht die weitgehend elektrolytfreie, hochporöse Schicht 1a und setzt sich in der hydrophoben Schicht 1c nach der eingangs angegebenen Reaktionsgleichung mit $H_2O$ um, welches die hydrophile bzw. elektrolytaffine Schicht 1b in unmittelbarer Nähe ständig verfügbar hält. Als Reaktionsprodukte entstehen durch Aufnahme von Elektronen aus der negativen Elektrode Hydroxylionen.

Die Herstellung einer erfindungsgemäßen Hilfselektrode ist nach Figur 2 sehr einfach: jeweils in getrennten Arbeitsgängen wird eine Pulvermischung aus den bereits genannten Komponenten der Katalysatorschicht zu einer Folie 4 gewalzt und auf ein Kunststoffylies 2 eine 1 bis 2 %ige wässrige Tylosemischung 3 aufgetragen. Vlies und Folie werden darauf, vorzugsweise als Endlosband, einem Kalander 5 zugeführt und unter leichtem Anpreßdruck über den noch feuchten Tylose-Auftrag, der als willkommenes Klebemittel fungiert, miteinander verbunden. Danach durchläuft das zusammengefügte laminierte Material eine Trockenstrecke 6.

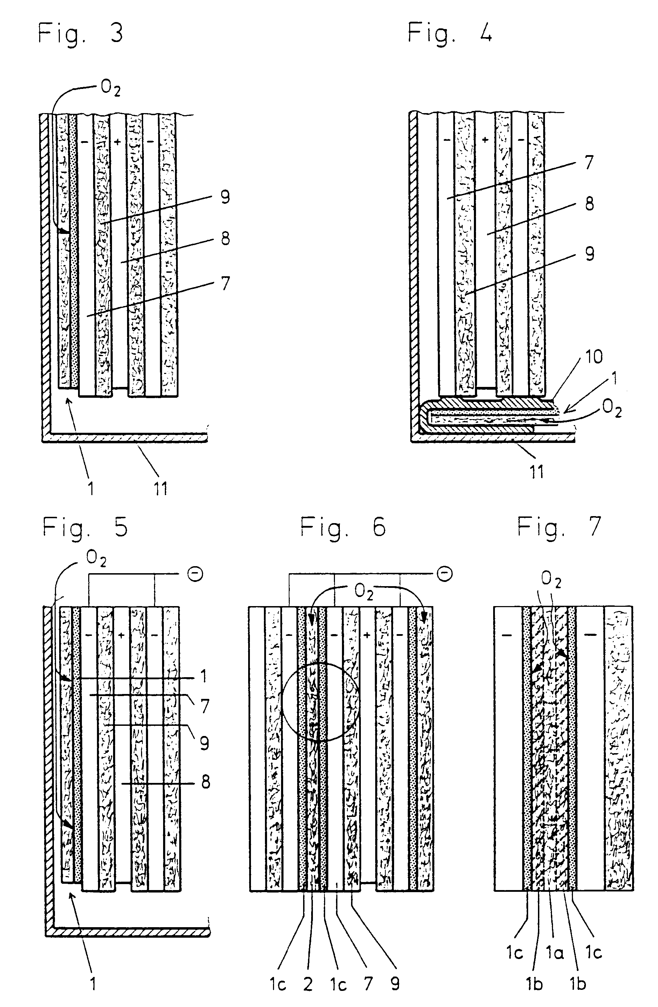

Die Figuren 3 bis 7 illustrieren einige Möglichkeiten der Positionierung erfindungsgemäßer Hilfselektroden 1 sowohl in gasdichten Rundzellen als auch in prismatischen Zellen.

So kann in einer Rundzelle mit Wickelelektroden die Hilfselektrode entweder nach Fig. 3 dem äußeren Ende des Spiralwickels, das von der Negativen gebildet wird, anliegen, oder sie kann nach Fig. 4 in Gestalt einer Ronde, gegebenenfalls auch eines Stapels aus mehreren Ronden, gegenüber einer Stirnseite des Wickels, z. B. nahe am Zellenboden angebracht sein. Besonders vorteilhaft läßt sich die Hilfselektrode dort mit einer Multikontaktscheibe, die sich als Stromableiter für die Negativen in Wickelzellen mit Sinterfolienelektroden bewährt hat, kombinieren.

Den Figuren entnimmt man im einzelnen jeweils die Hilfselektrode 1, die negative Elektrode 7, die positive Elektrode 8, den Separator 9, die elektrische Kontaktierung 10 der negativen Elektrode (Multikontaktscheibe) und den Zellenbecher 11. Die $O_2$ -Pfeile weisen auf die bevorzugte Orientierung der Hilfselektrode hin, nämlich mit der vom Sauerstoffgas beaufschlagten ersten Schicht 1a nach außen.

Eine besonders vorteilhafte Anordnung einer erfindungsgemäßen Hilfselektrode (nicht dargestellt) läßt sich bei Wickelzellen dadurch realisieren, daß man zwischen positiver Elektrode und negativer Elektrode, wobei letztere die äußere Wickelspirale bildet, einen Separator vorsieht, welcher über das Ende der negativen Elektrode hinaus in Fortsetzung des Wickels soweit verlängert ist, daß er den Elektrodenwickel noch einmal umhüllt, und daß man auf dieses verlängerte Separator-Ende einseitig eine wässrige Tylose-Paste aufträgt, woraufhin auf die tylosefeuchte Seite eine vorgewalzte Katalysatormischung aufgedrückt wird.

Vorzugsweise ist die mit der Tylose zu behandelnde Seite der Separator-Verlängerung diejenige, welche der Becherwand abgekehrt ist, so daß beim fertig montierten und in den Becher eingesetzten Wickel das freie Separator-Ende mit seiner trockenen Seite der Becherwand und mit seiner Katalysator-Seite der negativen Elektrode anliegt. Dies entspricht auch der Schnittdarstellung nach Figur 3.

Durch diese Maßnahme gemäß der Erfindung wird der Vliesseparator zusätzlich als Basismaterial für die Hilfselektrode, nämlich als Bildner für die hydrophobe Schicht 1a und für die hydrophile Schicht 1b (vg. Figur 1) genutzt, denen dann nur noch die Katalysatorschicht 1c hinzuzufügen ist. Dabei ist es für die Funktion der Hilfselektrode nicht wesentlich, ob sie mit der Verzehrschicht 1c oder mit der Gasleitschicht 1a an die negative Elektrode angrenzt. Wichtig dagegen ist, daß die Hilfselektrode außerhalb des Einflußbereiches des Selbstentlade-Shuttles angeordnet ist. Da sich der Shuttle zwischen einer positiven und einer negativen Elektrode abspielt, muß die Hilfselektrode, soll sie diesen nicht noch fördern, grundsätzlich außerhalb des Ionenweges zwischen gegenpoligen Elektroden angeordnet sein. Diese Bedingung kann, wie die meisten der hier angeführten Beispiele (Figuren 3 und 5 bis 7) zeigen, zumindest dadurch erfüllt werden, daß die Hilfselektrode zwischen zwei negativen Elektroden positioniert ist oder daß die Hilfselektrode überhaupt von einer negativen Elektrode gegenüber einer positiven Elektrode abgeschirmt wird.

In gasdichten prismatischen Zellen lassen sich laminierte Hilfselektroden ebenfalls auf mannigfache Weise anordnen. So ist gemäß Fig. 5 eine endständige negative Platte des aus negativen Elektroden 7, positiven Elektroden 8 und Separatoren 9 bestehenden Plattenblocks mit der Hilfselektrode 1 belegt, wobei die Hilfselektrode mit ihrer Verzehrschicht 1c bzw. Katalysator-Folie 4 der Negativen großflächig anliegt.

Nach Fig. 6 ist ein sandwichartiger Aufbau der erfindungsgemäßen Hilfselektrode vorgesehen, dergestalt, daß das Kunststoffaservlies 2 auf beiden Selten eine Tylose-Imprägnierung besitzt, eine mittlere Zone jedoch unverändert geblieben ist und als hydrophobe Gasleitschicht fungiert, und daß sich beiderseits an die Imprägnierungschichten 1b die Verzehrschichten 1c anschließen. Der Elektrodenstapel ist in diesem Falle so geordnet, daß sich eine Hilfselektrode vom Sandwich-Typ stets zwischen zwei negativen Elektroden befindet.

Fig. 7 gibt den eingekreisten Ausschnitt der Fig. 6 als Vergrößerung wieder.

## Patentansprüche

1. Gasdicht verschlossene alkalische Sekundärzelle mit mindestens einer positiven Elektrode, einer negativen Elektrode, einem zwischenliegenden Separator und einer mit der negativen Elektrode elektronenleitend verbundenen schichtförmigen Hilfselektrode zum Abbau des Sauerstoffdrucks, dadurch gekennzeichnet, daß die Hilfselektrode (1) eine Dreischichtelektrode aus einer den Zutritt des Sauerstoffs begünstigenden, hydrophoben und elektrisch nicht leitenden ersten Schicht (1a), einer hydrophilen zweiten Schicht (1b) und einer die katalytische Sauerstoffreduktion unterhaltenden, in elektronischem Kontakt zur negativen Hauptelektrode stehenden hydrophoben dritten Schicht (1c) ist.

2. Sekundärzelle nach Anspruch 1, dadurch gekennzeichnet, daß der ersten und der zweiten Schicht ein einlagiges Kunststopfaservlies (2) zugrundeliegt, auf dessen eine Seite eine wasserhaltige Celluloseäther-Mischung (3) aufgebracht ist, und daß die dritte Schicht aus einer folienförmig gewalzten Aktivkohlemischung (4) besteht, die dem Kunststoffaservlies an seiner mit dem Celluloseäther behandelten Seite auflaminiert ist.

3. Sekundärzelle nach Anspruch 2, dadurch gekennzeichnet, daß die aktivkohlehaltige Walzmischung aus 50 Gew.% bis 80 Gew.% Aktivkohle, 3 Gew.% bis 20 Gew.% Leitruß und 10 Gew.% bis 30 Gew.% PTFE zusammengesetzt ist.

4. Sekundärzelle nach Anspruch 3, dadurch gekennzeichnet, daß die aktivkohlehaltige Walzmischung aus ca. 75 Gew.% Aktivkohle, ca. 7,5 Gew.% Leitruß und ca. 17,5 Gew.% PTFE zusammengesetzt ist.

5. Sekundärzelle nach einem der Ansprüche 1 bis 4, dadurch gekennzeichnet, daß die Hilfselektrode außerhalb des Ionenweges zwischen gegenpoligen Elektroden angeordnet ist.

6. Sekundärzelle nach Anspruch 5, dadurch gekennzeichnet, daß die Hilfselektrode gegen eine positive Elektrode durch negative Elektroden zumindest abgeschirmt ist.

7. Sekundärzelle nach Anspruch 5, dadurch gekennzeichnet, daß bei einem Elektrodenwickel die Hilfselektrode aus einer über das Ende der negativen Elektrode in Fortsetzung des Wickels hinausgehenden Verlängerung des Separators gebildet ist, deren eine Seite mit Celluloseäther bestrichen und mit einer katalytisch wirksamen Beschichtung versehen ist, und daß die den Elektrodenwickel mit der negativen Elektrode als äußerer Spirale umhüllende Separator-Verlängerung der Innenwand des Zellenbechers anliegt.

8. Sekundärzelle nach Anspruch 7, dadurch gekennzeichnet, daß die mit Celluloseäther bestrichene und mit einer Katalysatorschicht versehene Seite der Separator-Verlängerung deren von der Becherwand abgekehrte Seite ist.

9. Sekundärzelle nach Anspruch 5, dadurch gekennzeichnet, daß bei einem Elektrodenwickel die Hilfselektrode gegenüber einer Stirnseite des Wickels in Form einer oder mehrerer Ronden angeordnet ist.

10. Sekundärzelle nach Anspruch 9, dadurch gekennzeichnet, daß die Hilfselektrode in eine Multikontaktscheibe (10) als Stromableiter für die negative Elektrode eingefügt ist.


**Claims**

1. Gas-tight sealed alkaline secondary cell with at least one positive electrode, a negative electrode, an intermediate separator and a lamellar auxiliary electrode connected in an electron-conducting manner with the negative electrode to reduce oxygen pressure, characterised in that the auxiliary electrode (1) is a three-layer electrode made from a hydrophobic and electrically non-conductive first layer (1a) which promotes oxygen access, a hydrophilic second layer (1b) and a hydrophobic third layer (1c) which is in electronic contact with the main negative electrode and which maintains catalytic oxygen reduction.

2. Secondary cell according to claim 1, characterised in that the first and the second layer are based on a single-layer synthetic fibre non-woven fabric (2), onto one side of which is applied a cellulose ether mixture (3) containing water, and that the third layer consists of an activated carbon mixture (4) rolled into a sheet, which is laminated to the side of the synthetic fibre non-woven fabric treated with the cellulose ether.

3. Secondary cell according to claim 2, characterised in that the rolling mixture containing activated carbon is composed of 50 wt.% to 80 wt.% activated carbon, 3 wt.% to 20 wt.% conductive carbon black and 10 wt.% to 30 wt.% PTFE.

4. Secondary cell according to claim 3, characterised in that the rolling mixture containing activated carbon is composed of approximately 75 wt.% activated carbon, approximately 7.5 wt.% conductive carbon black and approximately 17.5 wt.% PTFE.

5. Secondary cell according to one of claims 1 to 4, characterised in that the auxiliary electrode is arranged outside the ion path between counterpolar electrodes.

6. Secondary cell according to claim 5, characterised in that the auxiliary electrode is at least screened from a positive electrode by negative electrodes.

7. Secondary cell according to claim 5, characterised in that in an electrode winding the auxiliary electrode is formed by an elongation of the separator extending beyond the end of the negative electrode as a continuation of the winding, one side of which separator is coated with cellulose ether and is provided with a catalytically active layer, and that the separator elongation which encloses the electrode winding having the negative electrode in the form of the outer spiral lies against the inner wall of the cell can.

8. Secondary cell according to claim 7, characterised in that the side of the separator elongation coated with cellulose ether and provided with a catalyst layer is the side facing away from the can wall.

9. Secondary cell according to claim 5, characterised in that in an electrode winding the auxiliary electrode is arranged in the form of one or more disks opposite one end face of the winding.

10. Secondary cell according to claim 9, characterised in that the auxiliary electrode is incorporated in an multi-contact plate (10) as a current collector for the negative electrode.


**Revendications**

1. Cellule secondaire alcaline étanche au gaz avec au moins une électrode positive, une électrode négative, un séparateur placé entre les deux et une électrode auxiliaire stratiforme reliée par conduction électronique a l'électrode négative pour la dégradation de la pression d'oxygène, cellule caractérisée en ce que l'électrode auxiliaire (1) est l'électrode en trois couches constituée d'une première couche (1a) favorisant l'accès de l'oxygène, hydrophobe et non conductrice électriquement, d'une seconde couche (1b) hydrophile et d'une troisième couche hydrophobe (1c) maintenant la réduction catalytique de l'oxygène et un contact électronique par rapport à l'électrode négative principale.

2. Cellule secondaire selon la revendication 1, caractérisée en ce qu'à la base de la première et de la seconde couche, est placée une couche de non-tissé (2), sur un côté de laquelle est appliqué un mélange aqueux d'éther cellulosique (3), et en ce que la troisième couche est constituée par un mélange de charbon actif (4) lamine sous forme de film et qui est appliqué par laminage sur le côté traité avec l'éther cellulosique du non-tissé.

3. Cellule secondaire selon la revendication 2, caractérisée en ce que le mélange laminé contenant du charbon actif est composé de 50 à 80 % en poids de charbon actif, de 3 à 20 % en poids de noir de carbone conductrice, et de 10 à 30 % en poids de PTFE.

4. Cellule secondaire selon la revendication 3, caractérisée en ce que le mélange laminé contenant du charbon actif est composé d'environ 75 % en poids de charbon actif, d'environ 7,5 % en poids de noir de carbone conductrice et d'environ 17,5 % en poids de PTFE.

5. Cellule secondaire selon une des revendications 1 à 4, caractérisée en ce que l'électrode auxiliaire est disposée en dehors du trajet des ions entre les électrodes de polarité opposées.

6. Cellule secondaire selon la revendication 5, caractérisée en ce que l'électrode auxiliaire est au moins protégée contre une électrode positive par des électrodes négatives.

7. Cellule secondaire selon la revendication 5, caractérisée en ce que dans le cas d'un enroulement d'électrode, l'électrode auxiliaire est formée à partir d'un prolongement du séparateur allant au-delà de l'extrémité de l'électrode négative dans le prolongement de l'enroulement, et dont un côté est enduit d'éther cellulosique et est muni d'un revêtement catalytiquement efficace, et en ce que le prolongement du séparateur enveloppant l'enroulement des électrodes avec l'électrode negative comme spirale externe s'applique contre la paroi interne du godet de la cellule.

8. Cellule secondaire selon la revendication 7, caractérisée en ce que le côté du prolongement du séparateur enduit d'éther cellulosique est muni d'une couche de catalyseur et son côté opposé à la paroi du godet.

9. Cellule secondaire selon la revendication 5, caractérisée en ce que dans un enroulement d'électrode, l'électrode auxiliaire est disposée en face d'un côté frontal de l'enroulement sous la forme d'un ou plusieurs flans circulaires.

10. Cellule secondaire selon la revendication 9, caractérisée en ce que l'électrode auxiliaire est insérée dans un disque multicontact (10) jouant le rôle de conducteur d'évacuation du courant pour l'électrode négative.

$H_2O$

Fig. 1

$O_2$

$e^-$

$OH^-$

2

3

1

4

1a | 1b | 1c

Fig. 2

2

3

5

6

4

EP 0 416 244 B1

Fig. 3

Fig. 4

Fig. 5

Fig. 6

Fig. 7

8